# EUROPÄISCHE PATENTANMELDUNG

(11) **EP 1 559 528 A1**
(43) Veröffentlichungstag der Anmeldung: **03.08.2005**
(21) Anmeldenummer: 04002152.9
(22) Anmeldetag: 30.01.2004
(51) Int. Cl.: B29C 43/46, B29C 33/02, B29C 43/22

(54) **Vorrichtung und Verfahren zum Formen eines Folienbandes**

(71) Anmelder: Kark AG, 21149 Hamburg (DE)
(72) Erfinder: Kark, Uwe, 21149 Hamburg (DE)
(74) Vertreter: Glawe, Delfs, Moll & Partner

(57) **Zusammenfassung**

Vorrichtung zum Formen eines bei erhöhter Temperatur formbaren Bandes, insbesondere eines Bandes aus thermoplastischem Kunststoff, im Durchlauf auf der Oberfläche einer rotierenden Trommel (1), die in vorbestimmten, stationären Bereichen (10, 11) zu beheizen und/oder zu kühlen ist. Um die Energieverluste durch den Heiz- und Kühlwechsel zu verringern, ist die dünnwandige Trommel auf einem Trägerkörper (5) gelagert, der in den betreffenden Bereichen heiz- bzw. kühlbar ist und mindestens in diesen Bereichen mit der Trommeloberfläche wärmeaustauschfähig ist.

## Beschreibung

Die Erfindung betrifft eine Vorrichtung zum Formen eines Bandes im Durchlauf auf der Oberfläche einer rotierenden Trommel, die in vorbestimmten, stationären Bereichen zu beheizen und/oder zu kühlen ist. Anwendungsgebiet ist vornehmlich die Formung von Kunststoffolien oder -platten, die dank ihrer Oberflächenform besondere optische Eigenschaften haben sollen, beispielsweise als Fresnellinsen. Ein anderes Anwendungsgebiet ist die dreidimensionale Musterung von Tapeten oder Textilstoffen mit oder ohne Beteiligung von thermoplastischen Kunststoffen. Das zu formende Band wird in der beheizten Zone in derart innigen Kontakt mit der Trommeloberfläche gebracht, daß es deren Form komplementär annimmt. Beispielsweise wird ein aus einer Extruderdüse im heißplastischen Zustand auf die Oberfläche der Trommel gegebener Kunststoffstrang durch eine Kalanderwalze gegen die Trommel gepreßt und füllt die dort vorgesehenen Formvertiefungen. Das Band verfestigt sich in der folgenden Kühlzone, um schließlich in formstabilem Zustand von der Trommel abgenommen werden zu können.

Bei einer bekannten Vorrichtung dieser Art (DE-A 19900381) ist derjenige Bereich der Trommel, auf den die Kunststoffschmelze auftrifft, beheizt, um eine vorzeitige Erstarrung des Kunststoffs zu verhindern. Dadurch soll sichergestellt werden, daß der Kunststoff hinreichend fließfähig ist, um auch feinteilige Formvertiefungen der Trommeloberfläche vollständig füllen zu können. An den beheizten Bereich der Trommel, in welchem der Kunststoff aufgegeben wird, schließt sich ein Kühlbereich an, in welchem der auf der Trommel befindliche Kunststoff von der der Trommel abgewandten Seite her durch Kühlluft gekühlt wird. Nach seiner Erstarrung wird er bandförmig von der Trommel abgezogen. Die Kühlung von der Außenseite her hat den Nachteil, daß es schwierig ist, die sichere Erstarrung auch der innen an der Trommel anliegenden, feinen Kunststoffstrukturen zu erreichen, auf die es aber besonders ankommt.

Es ist auch bekannt (DE-A-4110248; DE-C-19943604), die Trommel von innen zu kühlen, während die Trommeloberfläche vor dem Erreichen der Aufgaberegion durch äußere Heizmittel aufgeheizt wird. Die wechselnde Erwärmung und Abkühlung ist mit hohem Energieverlust verbunden, weil vorausgesetzt werden muß, daß die Trommel aus Gründen der Steifigkeit dick ist und eine entsprechend hohe Wärmekapazität hat. Das gilt erst recht, wenn die Trommel ausschließlich von innen beheizt und gekühlt wird (US-A-5945042, Fig. 3).

Es ist auch bekannt, zur Formung des Kunststoffbands statt einer Trommel ein endloses Band zu verwenden (US-A-5945042, Fig. 1). Jedoch kann man tiefe und genaue Gravuren, wie sie beispielsweise für die Herstellung optisch wirksamer Kunststoff-Formteile benötigt werden, in endlosen Bändern nicht mit hinreichender Formhaltigkeit und Biegewechselfestigkeit verbinden.

Der Erfindung liegt die Aufgabe zugrunde, eine Vorrichtung der Eingangs genannten und im Oberbegriff des Anspruchs 1 angegebenen Art zu schaffen, bei der trotz Verwendung einer zylinderförmigen Trommel die Wärmeverluste reduziert sind.

Die erfindungsgemäße Lösung besteht in dem Merkmal des Anspruchs 1 und vorzugsweise denjenigen der Unteransprüche.

Demnach ist vorgesehen, daß die Trommel zumindest in denjenigen Bereichen, in denen sie beheizt bzw. gekühlt werden soll, wärmeaustauschfähig auf einem Trägerkörper gelagert ist, der in den betreffenden Bereichen mit Heiz- bzw. Kühleinrichtungen versehen ist. Die Trommel kann dank ihrer Abstützung auf dem Trägerkörper dünnwandig mit geringer Wärmekapazität ausgebildet werden. In wärmeaustauschfähigem Kontakt mit dem Trägerkörper nimmt sie rasch dessen Oberflächentemperatur an. Da dank ihrer geringen Wärmekapazität nur eine geringe Wärmemenge beim Wechsel der Temperatur ausgetauscht zu werden braucht, ist der Energieverlust gering.

Die Trommel kann unmittelbar auf der Oberfläche des Trägerkörpers gleiten. Wenn dieser einen hinreichend geringen Reibkoeffizient aufweist, wie es bei geeigneter Materialwahl (beispielsweise Graphit) der Fall ist, ist ein Schmiermittel zwischen der Trommel und dem Trägerkörper nicht erforderlich. Jedoch ist die Verwendung einer fluiden Zwischenschicht zweckmäßig, und zwar nicht nur zur Herabsetzung der Reibung bei beliebiger Werkstoffpaarung, sondern auch als Wärmeaustauschmedium. Das Fluid, vorzugsweise eine Flüssigkeit, kann mit einem Druck zugeführt werden, der höher als der Atmosphärendruck ist, um eine Stützwirkung auf die Trommel auszuüben und Festkörperkontakt im wesentlichen zu vermeiden. Zu diesem Zweck kann der Trägerkörper mit Einrichtungen zur hydrostatischen und/oder hydrodynamischen Lagerung der Trommel versehen sein. Zu diesem Zweck sind auf seiner Oberfläche zweckmäßigerweise in Umfangsrichtung wechselnd erhabene, in einer Zylinderfläche liegenden Flächenanteile und vertiefte Flächenanteile vorgesehen, in denen ein zur hinreichenden Abstützung der Trommel geeigneter Druck aufgebaut werden kann. Die Einrichtungen zum Einspeisen des Fluids münden zweckmäßigerweise in diesen vertieften Flächenanteilen. Die erhabenen und vertieften Flächenanteile sind innerhalb der Arbeitsbreite der Vorrichtung zweckmäßigerweise gleichmäßig von einem zum anderen Rand durchgehend ausgebildet, damit die Druck- und Temperaturverhältnisse über die ganze Breite des bearbeiteten Bandes konstant sind.

Es stehen im Stand der Technik verschiedene Möglichkeiten zur Beheizung bzw. Kühlung des Trägerkörpers zur Verfügung. Vorzugsweise wird dafür eine Wärmeträgerflüssigkeit verwendet, die durch die betreffenden Bereiche des Trägerkörpers und Wärmeaustauscher zirkuliert wird. Zu diesem Zweck kann der Trägerkörper in seinen zu beheizenden bzw. zu kühlenden Bereichen Wärmeaustauschflächen enthalten, bei denen es sich zweckmäßigerweise um Gruppen von achsparallelen Bohrungen handelt, die von der Wärmeträgerflüssigkeit durchströmt werden.

Die Fluidschicht zwischen den Gleitflächen bzw. Die hydrostatische Lagerflüssigkeit kann von dem Kreislauf der Wärmeträgerflüssigkeit vollständig getrennt sein. Das hat den Vorteil, daß die Flüssigkeiten sowie ihre Drücke und Temperaturen gemäß ihrer jeweiligen Funktion unabhängig voneinander optimal gewählt werden können. Jedoch läßt sich eine Vereinfachung der Konstruktion erreichen, wenn die Lagerflüssigkeit erfindungsgemäß von der Zirkulation der Wärmeträgerflüssigkeit abgeleitet wird. Zu diesem Zweck können Strömungsverbindungen zwischen den innerhalb des Trägerkörpers liegenden Wärmeaustauschflächen und seiner Oberfläche vorgesehen sein. Nicht die gesamte Flüssigkeit, die zur Beheizung bzw. Kühlung dem Trägerkörper zugeführt wird, muß auch anschließend den Zwischenraum zwischen der Trommel und dem Trägerkörper erreichen. Vielmehr genügt für die hydrostatische Lagerung oder Schmierung der Trommel in der Regel ein kleiner Anteil derselben.

Der hydrostatische Druck braucht nicht überall über den Umfang der Trommel bzw. des Trägerkörpers konstant zu sein. Vielmehr kann durch getrennte und geregelte Flüssigkeitszufuhr dafür gesorgt werden, daß in denjenigen Zonen, in denen eine besonders starke Stützwirkung gewünscht wird, der Druck höher ist als in anderen Zonen. Insbesondere kann der Druck in derjenigen Zone, in der der flüssige bzw. plastische Kunststoff zwischen der Oberfläche der Trommel und einer kalibrierenden Gegenoberfläche verteilt wird, höher eingestellt werden als in den im Umlauf folgenden Zonen.

Die wegen ihrer Dünnwandigkeit empfindliche Trommel bedarf an ihrem Rand einer zusätzlichen Stützung. Dafür sind stirnseitige Halteringe vorgesehen, die mit ihr fest verbunden sind. Sie weisen eine in den Innendurchmesser der Trommel passende Ansatzfläche und einen Anschlagbund auf, gegen den die Stirnfläche der Trommel mittels einer Mehrzahl von über den Umfang verteilten Spannfingern axial gespannt werden kann. Dank dieser Anordnung bleiben die Spannkräfte auf den Randbereich der Trommel beschränkt. Störende Kräfte in radialer Richtung oder Umfangsrichtung sind nicht zu erwarten. Ebensowenig kann es dank der Stützung durch die Halteringe zu Verspannungen quer über die Breite der Trommel kommen.

Der Trägerkörper wird zweckmäßigerweise von einem zwischen zwei Flanschplatten axial gespannten Hohlzylinder oder Segmenten eines Hohlzylinders gebildet. Die Ausbildung der Fügeflächen dieser Teile als Rotationskörper erlaubt eine genaue Fertigung und Montage.

Die im Gleitspalt des Heizbereichs und des Kühlbereichs verwendeten Flüssigkeiten stimmen zweckmäßigerweise stofflich überein, damit sie nicht absolut dicht voneinander getrennt werden müssen.

Die Erfindung wird im folgenden näher unter Bezugnahme auf die Zeichnung erläutert, die ein vorteilhaftes Ausführungsbeispiel veranschaulicht. Es zeigen:
- Fig. 1: eine schematische Gesamtansicht der Anlage,
- Fig. 2: einen Axialschnitt durch die Vorrichtung,
- Fig. 3: einen der Fig. 2 entsprechenden Axial-Teilschnitt in größerem Maßstab,
- Fig. 4: eine Stirnansicht,
- Fig. 5: eine Teil-Oberflächenabwicklung der Trommel,
- Fig. 6: einen oberflächenparallelen Teilschnitt durch die Trommel,
- Fig. 7: einen Teil-Axialschnitt durch die Trommel und den Trägerkörper und
- Fig. 8: ein Hydraulikschema.

Eine Trommel 1 zum Formen eines aus einer Extruderdüse 2 austretenden Strangs 3 eines heißplastischen, thermoplastischen Kunststoffs ist drehbar gemäß Pfeilrichtung 4 auf einem stationären Trägerkörper 5 angeordnet. Über einen Teil des Umfangs der Trommel 1 ist ein Stahlband 6 gespannt, das über die Walzen 7, 8 und 9 läuft und mit der Oberfläche der Trommel 1 einen Spalt einschließt, in welchem sich der zu formende Kunststoffstrang 3 befindet, um gegen die Trommeloberfläche gepreßt zu werden. Die Walze 7 wirkt über das Stahlband als Kalander, der die Dicke des Kunststoffbandes bestimmt. In demjenigen Bereich, in welchem der Kunststoffstrang 3 auf die Trommeloberfläche aufgegeben und durch die Walze 7 gegen die Trommeloberfläche gepreßt wird, wird die Trommel 1 auf auf mindestens die Schmelzentemperatur geheizt. Bei Verwendung von PMMA als Kunststoff soll die Oberflächentemperatur beispielsweise mindestens 180°C betragen und besser in der Größendordnung von 220°C liegen. In einem sich an die Walze 7 anschließenden Umfangsbogen kann die Temperatur erforderlichenfalls weiterhin so hoch gehalten werden, daß der Kunststoff hinreichend Zeit und Fließfähigkeit bis zur vollständigen Füllung der auf der Trommeloberfläche befindlichen Formvertiefungen hat. Der Bereich 10, in welchem die Trommel sich auf erhöhter Temperatur befinden soll, wird im folgenden als Heizbereich bezeichnet.

Daran schließt sich der Kühlbereich 11 an, in welchem die Trommel 1 gekühlt wird, damit der Kunststoffstrang 3 am Ende dieses Bereichs eine Temperatur unterhalb der Glasübergangstemperatur aufweist. Gewünschtenfalls kann der Kunststoffstrang im Kühlbereich auch von der Außenseite her durch eine Einrichtung 12 gekühlt werden. Im Anschluß an den Kühlbereich 11 wird der Kunststoffstrang von der Trommel 1 abgehoben und zur weiteren Bearbeitung abgeführt. Insoweit kann die Anlage als bekannt betrachtet werden.

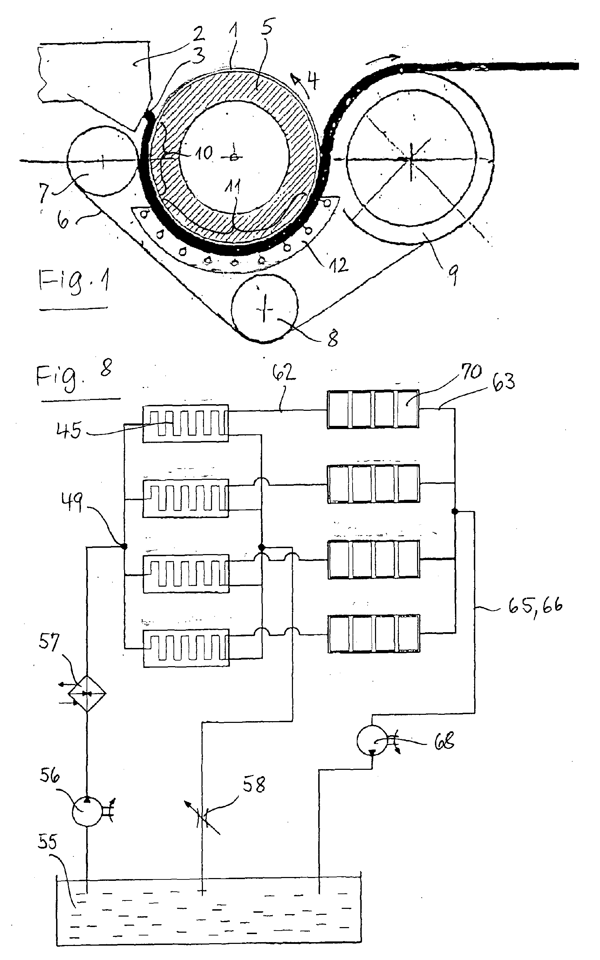

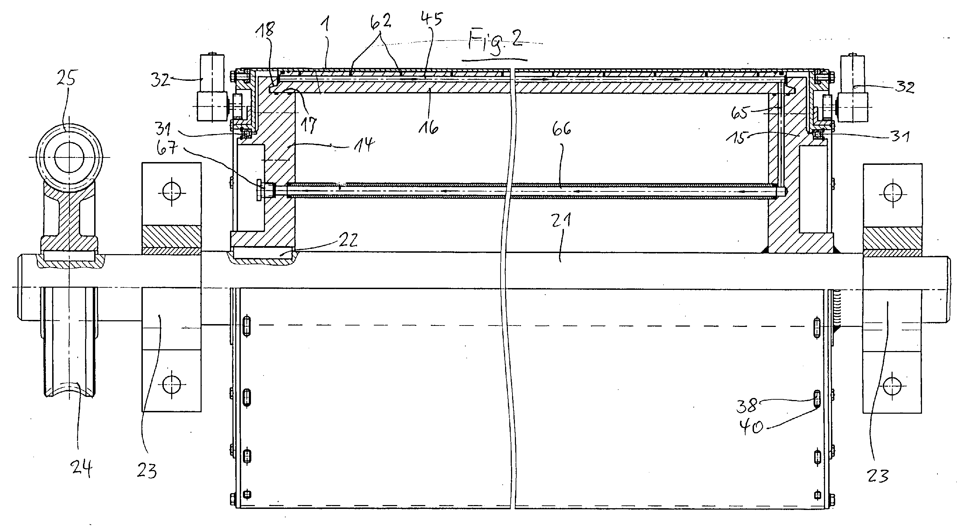

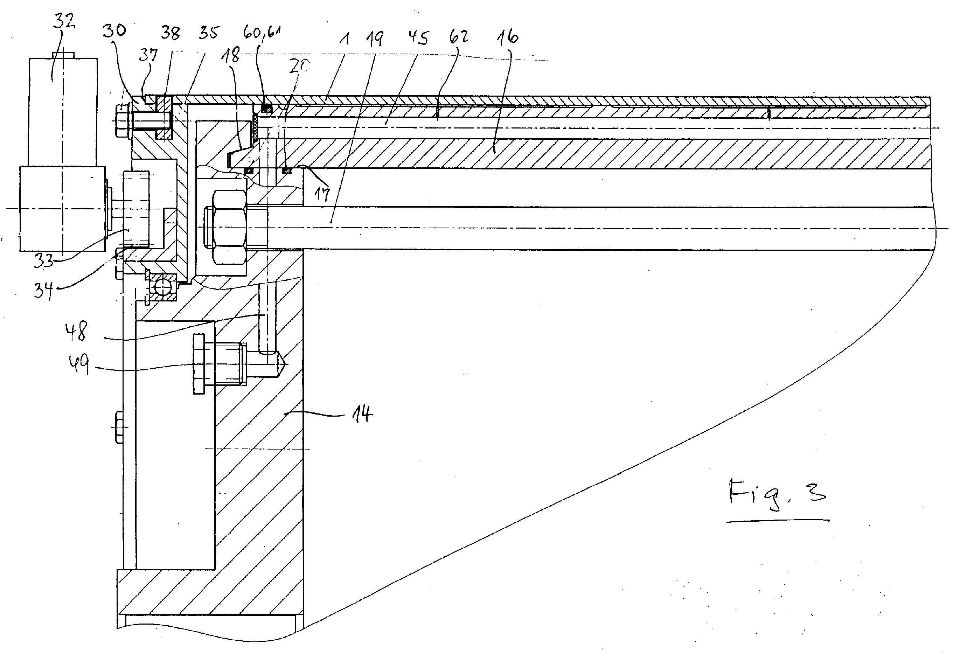

Wie in Fig. 2 und 3 erkennbar, ist die Trommel 1 sehr dünn im Vergleich mit ihrem Durchmesser. Ihre Dicke liegt zwischen 2 und 10, vorzugsweise zwischen 3 und 5 mm. Ihr Durchmesser ist in der Regel größer als das Hundertfache ihrer Dicke, beispielsweise 800 mm.

Die Trommel besteht aus einem Werkstoff, der bei den herrschenden Temperaturen hinreichende Formbeständigkeit aufweist und mit den gewünschten Formvertiefungen versehen werden kann. Er besteht beispielsweise aus Kupfer und kann im galvanischen Verfahren auf einer komplementären Mutterform aufgebaut oder nachträglich graviert werden. Dies ist bekannt.

Die Trommel 1 ist gleitend rotierbar auf dem Trägerkörper 5 gelagert, der im dargestellten Beispiel eine sich durchgehend über 360 Grad erstreckende, im wesentlichen zylindrische Oberfläche bildet. Die Trommel 1 ist dadurch auf ihrem ganzen Umfang abgestützt. Jedoch besteht auch die Möglichkeit, die Abstützung auf diejenigen Umfangsbereiche der Trommel 1 zu beschränken, in welchen die Trommel radial wirkenden Kräften ausgesetzt ist. Die Trommel 1 sitzt auf der Oberfläche des Hohlzylinders 16 mit einem Gleit- oder Laufsitz, der bei Zuführung von Öl unter Druck in den Gleitspalt hinreichende Reibungsfreiheit ermöglicht. Das in den Gleitspalt eingedrückte Öl setzt die Reibung herab und gewährleistet einen ungestörten Wärmefluß. Falls die Gefahr besteht, daß die Gleitlagerung nicht ausreicht für eine hinreichend reibungs- und verschleißarme Abstützung der Trommel 1 gegenüber der Kalanderwalze 7, d.h. in dem Bereich, in dem sie am höchsten belastet ist, kann eine zusätzliche Abstützung durch eine in der Oberfläche des Trägerkörpers eingelassene Stützwalze vorgesehen werden.

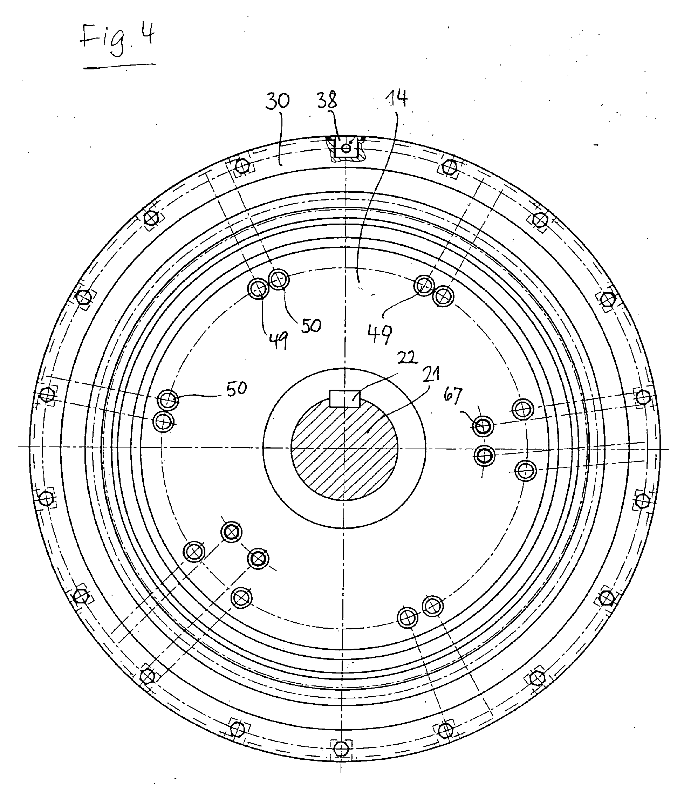

Der Trägerkörper besteht in dem in Fig. 2 bis 7 dargestellten Beispiel aus zwei Tragflanschen 14, 15 und einem hohlzylindrischen Teil 16, der als über den ganzen Umfang sich erstreckender Hohlzylinder oder als eine Gruppe von Zylindersegmenten ausgebildet sein kann. Die Flanschen 14, 15 bilden zylindrische Ansatzflächen 17 für die passende Aufnahme des Innenrands des Hohlzylinders 16 bzw. der Segmente. Der Rand des hohlzylindrischen Teils 16 und die Flanschen wirken ferner über eine Kegelfläche 18 zusammen, welche spielfreie gegenseitige Zentrierung gewährleistet, wenn die Flanschen 14, 15 durch über den Umfang verteilte Spannschrauben 19 axial zusammengezogen werden. Dies gilt auch dann, wenn der hohlzylindrische Teil 16 von mehreren getrennten Segmenten gebildet ist. Dies kann zweckmäßig sein, wenn aufeinanderfolgende Segmente thermisch voneinander getrennt werden sollen. So ist es beispielsweise möglich, gesonderte Segmente für den Heizbereich und den Kühlbereich zu verwenden. Auch eine gegebenenfalls zwischen diesen Bereichen befindliche Wärmedämmung kann als ein gesondertes Segment ausgebildet sein.

Der Trägerkörper ist im Betrieb stationär mit einem nicht dargestellten Haltegestell verbunden. Das Ausführungsbeispiel sieht jedoch vor, daß er im Winkel verstellbar ist, damit seine Heiz- und Kühlbereiche optimal im Verhältnis zu derjenigen Stelle eingestellt werden können, an welcher der heißplastische Strang 3 zugeführt und kalandriert wird. Zu diesem Zweck werden die Flanschen 14, 15 von einer Achse 21 getragen, mit der einer der Flanschen 15 starr verbunden ist, während der andere Flansch 14 darauf im Hinblick auf die notwendige Wärmedehnung axial verschiebbar,aber dank einer Paßfederanordnung 22 drehfest ist. Die Achse ruht in Lagern 23. Ihre Drehstellung wird durch eine geeignete Einstelleinrichtung bestimmt, die im Beispiel der Fig. 2 von einem Schneckenrad 24 und einer Schnecke 25 gebildet ist.

Zur Verstärkung der dünnwandigen Trommel ist sie an den Rändern starr mit Ringen 30 verbunden, die gewünschtenfalls über Lager 31 an den Flanschen 14, 15 des Trägerkörpers 5 abgestützt sein können. Die Lager sind so ausgebildet, daß Wärmedehnungen nicht zu einer Verspannung der Trommel führen können. Wenn ein Drehantrieb 32 für die Trommel vorgesehen ist, wirkt dieser über Zahnrad 33 und Zahnkranz 34 auf mindestens einen dieser Ringe, vorzugsweise aber gleichmäßig auf beide Ringe 30, um die auf die dünnwandige Trommel wirkenden Kräfte gering und symmetrisch zu halten. In manchen Fällen ist ein Drehantrieb für die Trommel entbehrlich, wenn das Stahlband 6 angetrieben ist. Dies gilt insbesondere, wenn die Trommel formschlüssig von dem angetriebenen Stahlband 6 durch zusammenwirkende Zähne und Zahnlochung, ähnlich einem Filmstreifen und einer Filmwalze, mitgenommen wird. Mitunter genügt aber für die Mitnahme auch die über das erstarrende Band ausgeübte Reibung.

Die Ringe 30 weisen eine zum Innendurchmesser der Trommel 1 passende, zylindrische Ansatzfläche 35 auf, die außenseits durch einen Anschlagbund 36 begrenzt wird. Die Stirnfläche 37 der Trommel wird mittels Fingern 38 und Schrauben 39 gegen den Anschlagbund gespannt. Zu diesem Zweck greifen die Finger 38 in Öffnungen 40 der Trommel 1, die in gleichmäßigem Abstand über den Umfang der Trommel entlang deren beiden Rändern verteilt sind. Die Öffnungen sind in Umfangrichtung größer als die Finger 38, damit nicht im Falle von Herstellungs- und Montagetoleranzen unerwünschte Umfangsspannungen von den Fingern 38 auf die Trommel ausgeübt werden können.

Dem Heizbereich kann die Wärmenergie auf verschiedene Weise zugeführt werden, beispielsweise mittels elektrischer Widerstandsheizkörper, Gasbrennern oder induktiver Beheizung. Im dargestellten Beispiel ist die Energiezuführung mittels einer Wärmeträgerflüssigkeit, insbesondere Öl, vorgesehen. Der Heizbereich enthält eine oder mehrere Gruppen von achsparallelen Bohrungen 45, die paarweise wechselnd an ihren Enden durch ausgefräste Taschen 46 verbunden sind, die mit Deckeln 47 verschlossen sind. Dadurch ergibt sich ein geschlossener Strömungsweg von einer ersten Bohrung 45' zu einer letzten Bohrung 45''. Wenn mehrere solcher Bohrungsgruppen vorhanden sind, können dafür jeweils getrennte Heizsegmente vorgesehen sein oder es sind mehrere Gruppen innerhalb eines durchgehenden Heizsegments enthalten.

Wie Fig. 3 zeigt, ist eine erste Bohrung 45' einer Gruppe mit einer radialen Vorlaufbohrung 48 verbunden, die mittels eines Dichtrings 20 am Übergang von dem Hohlzylinderteil 16 zum Flansch 14 abgedichtet ist. Die Vorlaufbohrung 48 führt zu einem Vorlaufanschluß 49. In gleicher Weise ist die letzte Bohrung 45'' einer Gruppe über eine Rücklaufbohrung mit einem Rücklaufanschluß 50 verbunden.

Gemäß Fig. 8 wird dem Vorlaufanschluß 49 die Heizflüssigkeit von einem Flüssigkeitsvorrat 55 über eine Pumpe 56 und einen Wärmetauscher 57 zugeführt. Vom Rücklaufanschluß 52 gelangt sie zurück in den Vorrat 55. Zur Einstellung des in dem System wirkenden Drucks ist eine vorzugsweise einstellbare Drossel 58 vorgesehen. Der Kühlbereich kann in der gleichen Weise ausgebildet sein.

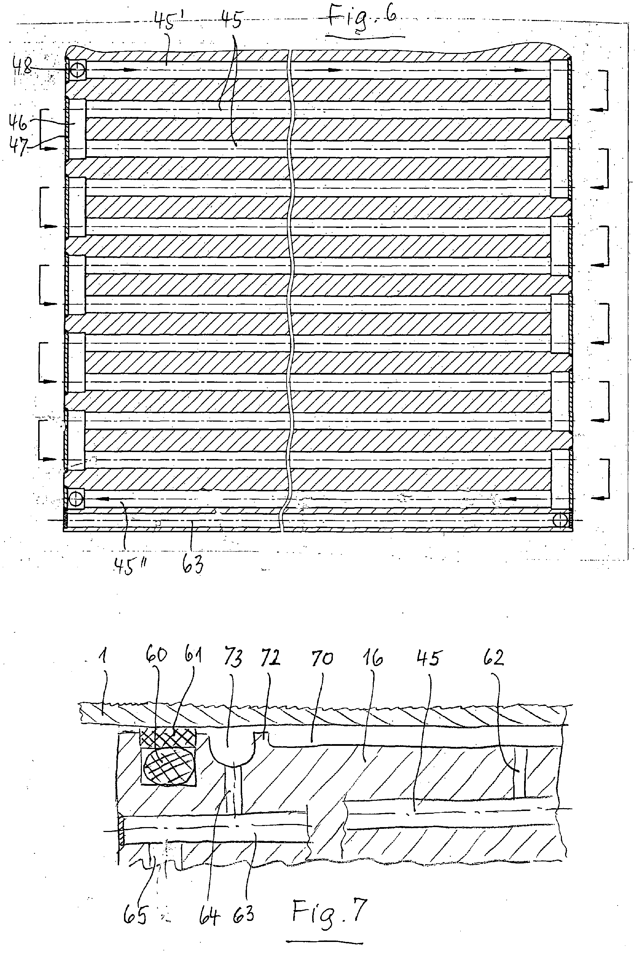

Zur Herabsetzung der Reibung zwischen der Trommel 1 und der Oberfläche des Trägerkörpers 5 ist die Trommellagerung im Ausführungsbeispiel hydrostatisch ausgebildet. Das bedeutet, daß die Schmierflüssigkeit im Gleitspalt unter einem Druck gehalten wird, der mindestens ebenso groß ist wie der für die vorzugsweise berührungslose Abstützung der Trommel erforderliche Druck. Dieser Druck ist in demjenigen Bereich am größten, in welchem der heißplastische Strang 3 zwischen der Trommeloberfläche und der Oberfläche der Walze 7 auf die gewünschte Dicke herabgesetzt wird. Zwischen den Walzen 7 und 9 entspricht der Druck im wesentlichen dem Druck, der von der Spannung des Stahlbands auf den heißplastischen Strang ausgeübt wird. Am geringsten ist der Lagerdruck im freien Trommelbereich zwischen der Walze 9 und der Extruderdüse 2. Es kann deshalb zweckmäßig sein, den Gleitspalt zwischen der Trommel 1 und der Oberfläche des Trägerkörpers 5 in getrennte, mit unterschiedlichem Lagerdruck beaufschlagte Zonen aufzuteilen. Diese Zonen werden gegeneinander und gegen die Atmosphäre abgedichtet. Dafür können besondere Dichtleisten vorgesehen sein. Gemäß Fig. 7 wird eine solche in einer Nut angeordnete Dichtleiste 61 aus gleitgünstigem Material, beispielsweise PTFE, durch einen Elastomerring 60 gegen die Innenfläche der Trommel 1 gedrückt. Solche Dichtungseinrichtungen können sowohl am Umfang als auch quer dazu vorgesehen sein. Während am Umfang weitgehende Dichtigkeit erwünscht ist, brauchen die zwischen den aufeinanderfolgenden Zonen befindlichen Querabdichtungen lediglich eine so hohe Drosselwirkung zu erzeugen, daß der gewünschte Druckunterschied zwischen diesen Zonen gewährleistet ist.

Die Flüssigkeitsversorgung des Gleitspalts kann unabhängig von dem Heizmedium erfolgen. Jedoch gelingt eine nicht unerhebliche Vereinfachung der Konstruktion erfindungsgemäß dadurch, daß sie von dem Heizmedium abgeleitet wird. In Fig. 3 ist erkennbar, daß Verbindungsbohrungen 62 zwischen einer Bohrung 45 des Heiz- oder Kühlsystems und der Oberfläche des Trägerkörpers vorgesehen sind. Ein Teil des als Heiz- bzw. Kühlmedium zirkulierenden Öls gelangt durch diese Bohrungen in den Gleitspalt und dient dort als Schmiermittel und hydrostatisches Druckmittel. Um es wieder abzuführen, ist für jede Druckzone des Gleitspalts eine Abführungsbohrung 63 (Fig. 7) vorgesehen, die über eine Bohrung 64 mit dem Gleitspalt verbunden ist und von der das Öl über eine radiale Bohrung 65 im Flansch 15 und ein Verbindungsrohr 66 zu einem Anschluß 67 gelangt.

Die Oberfläche des Trägerkörpers kann durchgehend glatt sein. Bevorzugt wird jedoch eine Ausführung, bei welcher vertiefte Flächenanteile 70 und erhabene Flächenanteile in Form von Leisten 72 im Wechsel vorgesehen sind. Die Leisten 72 bestimmen durch ihr Laufspiel gegenüber der Innenfläche der Trommel 1 deren Position. Die vertieften Flächenanteile 70 ermöglichen eine ungehemmte Druckausbreitung in der hydrostatischen Flüssigkeit.

Der Druck im Gleitspalt und insbesondere in den hydrostatisch druckbeaufschlagten, vertieften Flächenanteilen 70 wird wesentlich durch den Strömungswiderstand bestimmt, den die Flüssigkeit in ihrem Ablaufweg vorfindet. Er kann dadurch eingestellt werden, daß im Ablaufweg eine Drossel vorgesehen ist. Wenn die Drücke in verschiedenen Druckzonen unterschiedlich sind, können diesen Zonen entsprechend unterschiedliche eingestellte oder einstellbare Drosseln zugeordnet werden.

Das Ausführungsbeispiel zeigt in Fig. 7 eine einfachere Anordnung. Die Flüssigkeitsabfuhr findet am Rande jeder Druckzone statt. Innerhalb der Dichtleiste 61, die die Zone umgrenzt, ist eine Sammelrinne 73 vorgesehen, die über die Bohrungen 64 mit der Abfuhrleitung 63 in Verbindung steht. Zwischen dem druckbeaufschlagten, vertieften Flächenanteil 70 und der Sammelrinne 73 ist eine erhöhte Leiste 72 angeordnet. Die Leiste bildet mit der Innenfläche der Trommel 1 einen engen Spalt, durch den der Druck des aus dem Bereich 70 abfließenden Öls weitgehend selbstregelnd gedrosselt wird. Wenn der von der Trommel übertragene Druck größer ist als der Druck im Lagerspalt, nähert sich die Trommel dem Trägerkörper, wodurch der Spalt enger wird. Dadurch wird der Abfluß gehemmt, und der Druck im Lagerspalt wächst, bis er dem von der Trommel übertragenen Druck gleicht. Vorausgesetzt wird dabei, daß die Ölzufuhr zur Erzeugung eines Drucks hinreichender Höhe fähig ist. Auf diese Weise bildet die Leiste 72 mit der Innenfläche der Trommel eine selbstregelnde Drosselanordnung.

Von der Sammelrinne 73 kann das Öl durch eine Pumpe 68 abgezogen werden. Dies hat den Vorteil, daß der in der Sammelrinne 73 herrschende und auf die Dichtanordnung 60, 61 wirkende Druck herabgesetzt und die an die Dichtanordnung zu stellende Dichtheitsanforderung gesenkt wird.

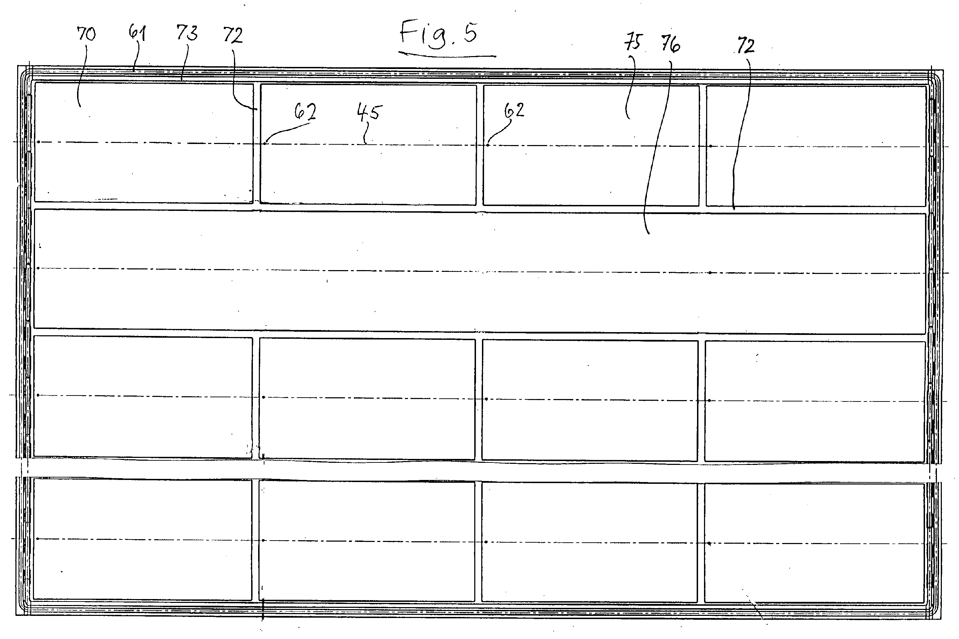

Die Abgrenzung von Zonen unterschiedlichen Drucks, die in Umfangsrichtung aufeinanderfolgen, kann mit einer Anordnung erfolgen, wie sie in Fig. 7 dargestellt ist. Jede Zone ist dann von einer Drosselleiste 72 und einer das Öl abführenden Sammelrinne 73 umschlossen. Jeder Zone kann auch eine Dichtanordnung 60, 61 zugeordnet sein, oder es ist nur eine solche Dichtanordnung zwischen den benachbarten Zonen vorgesehen. Jedoch läßt sich eine einfachere Anordnung dann erreichen, wenn man Öl von der Zone höheren Drucks zu der Zone niedrigeren Drucks abfließen läßt. Dann kann es ausreichen, zwischen den beiden Zonen 75 und 76 (Fig. 5) eine Drosselleiste 72 vorzusehen und im übrigen der selbstregelnden Funktion dieser Leiste im Zusammenwirken mit der Trommeloberfläche zu vertrauen. Die selbstregelnde Anordnung von Drosselleisten zur Bestimmung des Drucks in der hydrostatischen Lagerung einer dünnen und unter den obwaltenden Drücken ggf. biegefähigen Trommel verdient Schutz unbhängig von den übrigen Merkmalen der Ansprüche.

Es kann zweckmäßig sein, die vertieften Flächenanteile über die gesamte Breite des Arbeitsbereichs der Anlage zu erstrecken, um Trennorgane zu vermeiden, die sich in dem Produkt abzeichenen könnten. So ist es in Fig. 5 bei dem Flächenanteil 76 dargestellt. Die vertieften Flächenanteile können aber auch eine andere Gestalt haben. Beispielsweise können über die Breite des Trägerkörpers mehrere Taschen 70 vorgesehen sein, die durch Leisten 72 als erhöhte Flächenanteile getrennt sind. Jeder der vertieften Bereiche 70 bzw. 76 enthält mindestens eine Flüssigkeitszufuhrbohrung 62, über die er mit einer Bohrung 45 des Heiz- bzw. Kühlsystems in Verbindung steht.

Die getrennte Flüssigkeitsversorgung der Zonen bzw. vertieften Flächenanteile gestattet es, sie mit unterschiedlichem Druck zu beaufschlagen. Sie können auch unterschiedlich temperiert werden. Dafür kann jeder Zone bzw. jedem Flächenanteil je eine gesonderte Gruppe von Wärmeaustauschbohrungen 45 zugeordnet werden.

## Patentansprüche

1. Vorrichtung zum Formen eines bei erhöhter Temperatur formbaren Bandes im Durchlauf auf der Oberfläche einer rotierenden Trommel (1), die in vorbestimmten, stationären Bereichen (10, 11) zu beheizen und/oder zu kühlen ist, **dadurch gekennzeichnet, dass** die Trommel (1) auf einem in den betreffenden Bereichen (10, 11) heizbaren bzw. kühlbaren Trägerkörper (5) gelagert und mindestens in diesen Bereichen (10, 11) zu seiner Oberfläche wärmeaustauschfähig angeordnet ist.

2. Vorrichtung nach Anspruch 1, **dadurch gekennzeichnet, daß** Einrichtungen (2) für die Zuführung eines heißplastischen Kunststoffstrangs (3) im heizbaren Bereich (10) vorgesehen sind und sich daran der kühlbare Bereich (11) anschließt.

3. Vorrichtung nach Anspruch 1 oder 2, **dadurch gekennzeichnet, daß** die Trommel (1) mindestens in ihren zu beheizenden bzw. zu kühlenden Bereichen (10, 11) an der Oberfläche des Trägerkörpers (5) - gegebenenfalls unter Einschluß einer Fluidschicht - gleitend anliegt.

4. Vorrichtung nach einem der Ansprüche 1 bis 3, **dadurch gekennzeichnet, daß** der Trägerkörper (5) mit Einrichtungen zur hydrostatischen und/oder hydrodynamischen Lagerung der Trommel (1) ausgerüstet ist.

5. Vorrichtung nach Anspruch 3 oder 4, **dadurch gekennzeichnet, daß** die Oberfläche des Trägerkörpers (5) zwischen erhabenen, in einer Zylinderfläche liegenden Flächenanteilen (72) vertiefte Flächenanteile (70) aufweist, die mit Flüssigkeitszufuhrkanälen (62) in Verbindung stehen.

6. Vorrichtung nach Anspruch 5, **dadurch gekennzeichnet, daß** die vertieften Flächenanteile (70) unterbrechungsfrei von einer Seite des Arbeitsbereichs der Trommel bis zu anderen durchgehen.

7. Vorrichtung nach einem der Ansprüche 1 bis 6, **dadurch gekennzeichnet, daß** für die Beheizung bzw. Kühlung des Trägerkörpers (5) die Zirkulation von Wärmeträgerflüssigkeit vorgesehen ist.

8. Vorrichtung nach Anspruch 7, **dadurch gekennzeichnet, daß** in den zu beheizenden bzw. zu kühlenden Bereichen (10, 11) des Trägerkörpers (5) von der Wärmeträgerflüssigkeit durchströmte Wärmeaustauschkanäle (45) vorgesehen sind.

9. oder 8, **dadurch gekennzeichnet, daß** die Fluidschicht bzw. die hydrostatische Lagerflüssigkeit von der Wärmeträgerflüssigkeit gebildet und aus deren Zirkulation abgeleitet ist.

10. Vorrichtung nach einem der Ansprüche 3 bis 9, **dadurch gekennzeichnet, daß** auf der Oberfläche des Trägerkörpers (5) Zonen unterschiedlichen hydrostatischen Lagerdrucks durch Dichtanordnungen (60, 61) oder Drosselleisten (72) voneinander abgegrenzt sind.

11. Vorrichtung nach Anspruch 10, **dadurch gekennzeichnet, daß** die Zonen unterschiedlichen hydrostatischen Lagerdrucks mit gesonderten Kanälen zur Flüssigkeitszuund/oder -abfuhr (62, 64) verbunden sind.

12. Vorrichtung nach einem der Ansprüche 1 bis 11, **dadurch gekennzeichnet, daß** die dünnwandige Trommel (1) an beiden Rändern mit je einem Haltering (30) fest verbunden ist.

13. Vorrichtung nach Anspruch 12, **dadurch gekennzeichnet, daß** die Halteringe (30) eine in den Innendurchmesser der Trommel (1) passende Ansatzfläche (35) und einen Anschlagbund (36) aufweisen, gegen den die Stirnfläche der Trommel (1) mittels einer Mehrzahl von über den Umfang verteilten Spannfingern (38) axial spannbar ist.

14. Vorrichtung nach einem der Ansprüche 1 bis 13, **dadurch gekennzeichnet, daß** der Trägerkörper (5) von einem zwischen zwei Flanschen (14, 15) axial gespannten Hohlzylinder oder mehreren Hohlzylindersegmenten (16) gebildet ist.

15. Vorrichtung nach einem der Ansprüche 1 bis 14, **dadurch gekennzeichnet, daß** der Trägerkörper (5) im Winkel um seine Längsachse verstellbar ist.

16. Verfahren zum Betrieb einer Vorrichtung nach Anspruch 9, **dadurch gekennzeichnet, daß** die in den zu beheizenden bzw. zu kühlenden Bereichen (10, 11) verwendeten Wärmeträgerflüssigkeiten übereinstimmen.
